Europäisches Patentamt

European Patent Office

Office européen des brevets

(11) Publication number: **0 399 821**
**A2**

# (12) EUROPEAN PATENT APPLICATION

(21) Application number: **90305653.9**

(22) Date of filing: **24.05.90**

(51) Int. Cl.5: **H02J 7/10**

(30) Priority: **24.05.89 GB 8911925**

(43) Date of publication of application:
**28.11.90 Bulletin 90/48**

(84) Designated Contracting States:
**AT BE CH DE DK ES FR GB GR IT LI LU NL SE**

(71) Applicant: **S.B. ELECTRONIC SYSTEMS LIMITED**
**Arden Grove**
**Harpenden Hertfordshire AL5 4SL(GB)**

(72) Inventor: **Barnett, Christopher F.**
**4 Blenheim Road**
**London W4 1UA(GB)**

(74) Representative: **Colgan, Stephen James et al**
**CARPMAELS & RANSFORD 43 Bloomsbury Square**
**London WC1A 2RA(GB)**

(54) **Apparatus and method for fast charging a nickel-cadmium cell or battery.**

(57) A method and apparatus for charging a Nicad cell or battery in which a fast charging current is intermittently applied and in which a time dependent change in impedance of the cell or battery is detected to indicate a full charge.

## FIG. 3

CELL VOLTAGE WHEN FULLY CHARGED

EP 0 399 821 A2

## APPARATUS AND METHOD FOR FAST CHARGING A NICKEL-CADMIUM CELL OR BATTERY

This invention relates to apparatus and a method for fast charging a nickel-cadmium (Nicad) cell or battery and, in particular, to a technique for terminating or reducing charging current when the cell or battery is fully charged.

It is desirable to fast-charge a Nicad battery when it is either fully, or partially discharged. Known apparatus enables the completely discharged Nicad cell or battery to be fast-charged over a timed interval but there are several disadvantages in using this technique. For example, when using a charging system which is intended to charge a fully discharged Nicad battery at a given maximum charging rate, then it will take a certain length of time to charge the battery fully. This is inconvenient where, for example, the battery may only be half-discharged and the user wishes to recharge it to ensure a full charge before it is used again. This is not only inconvenient, but it reduces the useful lifetime of the battery since the act of charging a Nicad battery expends its life.

If attempts are made to measure the terminal voltage of a Nicad battery whilst it is being supplied with charging current, the voltage will vary in accordance with the temperature of the battery and this can cause problems in trying to use voltage measurements to control charging.

Another problem met in practice is that perfect electrical connections are never made between the battery terminals and a charger because dirty or loose contacts contribute to circuit resistance and this will affect the measured voltage. This is a particularly difficult problem to avoid.

The present invention seeks to overcome these problems by providing apparatus for fast charging a nickel-cadmium (Nicad) cell or battery, the apparatus comprising:

a) means for providing a fast charging current,

(b) means for periodically terminating said charging current for a predetermined interval and for re- establishing said charging current after the interval, said means being responsive to a control signal either to terminate charging, or to reduce said charging current,

(c) means for measuring the voltage across the Nicad cell or battery terminals in order to determine that the impedance of the Nicad cell or battery has begun to change with time due to becoming fully charged, which change in impedance occurs either after said charging current is switched off, or after said charging current is switched on, and

(d) means for providing the control signal when the measured voltage indicates said change.

The invention also provides a method for fast charging a nickel-cadmium (Nicad) cell or battery, the method comprising the steps of:

(a) periodically terminating a fast charging current for a predetermined interval and re-establishing said charging current after the interval.

(b) measuring the Nicad cell or battery terminal voltage either immediately after terminating said charging current or immediately after re-establishing said charging current, in order to determine that the impedance of the Nicad cell or battery has begun to change with time due to becoming fully charged, and

(c) either terminating said charging current, or reducing it when said change has been detected.

The apparatus and the method may both be such that a control signal is generated to terminate, or to reduce the fast charging current when a voltage change detected either during the period when fast charging current is supplied, or during an off period when no current is supplied, exceeds a given value. This voltage change is measured at the Nicad cell or battery terminals and it represents the change in impedance with time due to the cell or battery becoming fully charged. It can be measured over either the fast charging interval or the non-charging interval, for example, by sampling the terminal voltage at the start and at the end of the respective interval. These samples are taken during the respective interval and not outside it. However, instead of sampling at these instants, the terminal voltage change can be measured generally at instants $t_1$ and $t_2$ which occur at other times during either the charging interval or the non-charging interval. For example, $t_1$ can be the start of the interval, or a later instant and $t_2$, which will occur after $t_1$, may be before the end of the respective interval. At the outset of fast charging a discharged Nicad cell or battery and during most of the charge, the terminal voltage remains relatively steady in the charging and non-charging intervals. However, as the cell or battery becomes fully charged, the terminal voltage suddenly and significantly changes in character with time and starts to rise and fall exponentially in the charging and non-charging intervals.

There are other ways in which this characteristic terminal voltage change can be detected without departing from the scope of the invention. For example, if the terminal voltage is measured at $t_3$ which occurs at similar instants during either each charging, or each non-charging period (e.g. at the end of each respective period), then the difference in terminal voltage measurements in successive charging or non-charging periods, or over a predetermined number of the respective periods, will indicate when the cell or battery is reaching, or has reached a full charge and the fast charging current needs to be terminated or reduced to a low level. These differences, measured over a span of time, represent a rate of change in terminal voltage occurring repeatedly at $t_3$ and they can be detected as a derivative or differential value. For example, if $t_3$ occurs at the end of every 10th charging period, the fast charge is reduced when the derivative exceeds a predetermined threshold value.

The invention is therefore concerned with a combination of fast charging a Nicad cell or battery and detecting that its impedance has begun to change characteristically in either the charging interval or the non-charging interval (which immediately follows a charging interval).

According to one embodiment of the invention, the voltage change is detected by sampling the terminal voltage at least twice during the charging interval, or the non-charging interval. For example, a sample and hold circuit can be used to sample the terminal voltage at the start of an interval and to hold this value and then to sample the terminal voltage at a later instant so that it can be compared with the initially held sample voltage. According to another embodiment of the invention, a sample and hold circuit can be used to obtain values at similar instants during either the charging, or non-charging interval and further circuitry can be used to calculate a derivative value, as mentioned above, which is compared with a reference value. In either case, when the voltage comparison exceeds a predetermined value, the fast charging current is terminated or reduced.

Besides the advantage of fast charging a Nicad cell or battery to a point of time when the charging current can be terminated or reduced, the invention has the advantage that it is independent of the absolute value of terminal voltage because the voltage change can be arbitrarily measured by comparing concurrently sampled values. Hence, the technique of the invention is not usually affected by contact resistance since any loss of voltage due to this effect would equally affect each sampled value.

The fast charging current is provided in an on-off fashion in order to safely charge the Nicad cell or battery. The level of fast charging current and the timing of the on-off periods depend on the size and the nature of the cell or battery. For example, whereas it may take some 14 hours (typically) to charge a Nicad cell or battery with a conventional low level charging current, the invention seeks to considerably reduce this charge period. In an embodiment of the invention, the charge period may be reduced to 1 hour (or less) by using a safe but high charging current over intermittent intervals.

For example, the charging current may be 4 amps supplied for 1 second followed by an off-period of 1 second. This will provide an average charging current of 2 amps/hour which would charge a (discharged) cell in approximately 1 hour where the cell has a capacity of 2 amp hours. This not only results in a fast charge but also creates the characteristic change in impedance which can be detected in order to terminate the charging current, as mentioned above. Clearly, those skilled in the art will understand how this principle can be applied more generally to charging Nicad cells or batteries of different sizes and/or types.

An embodiment of the invention will now be described with reference to the accompanying schematic drawings, in which:

Fig. 1 illustrates an intermittent charging current,

Fig. 2 illustrates a voltage change across the terminals of a Nicad cell before it is fully charged, and

Fig. 3 illustrate the voltage change across the Nicad cell when it is fully charged.

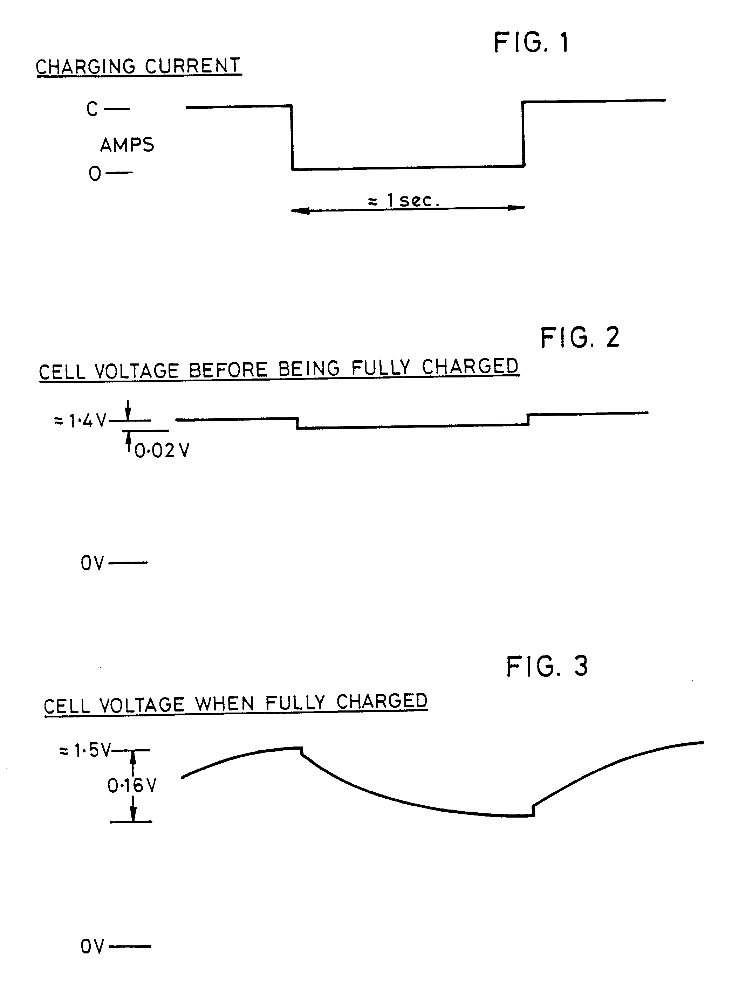

The preferred embodiment of the invention utilises conventional means, such as a transformer and rectifying circuit, for converting an alternating current supplied at mains voltage to a direct current at reduced voltage for charging the Nicad cell or battery. Hence, this requires no further description. Such means is used to provide a steady predetermined fast charging current at a value of C amps and a known timing circuit supplies this current in an on/off fashion, for example, so that it flows for one second and is then switched off for one second, and so on. This is represented by Fig. 1.

Fig. 2 represents a voltage measurement at the outset of a charging period, i.e., whilst the Nicad cell or battery is being charged. Before the cell or battery is fully charged, the voltage change in a charging or non-charging interval will be very small. The drop in terminal voltage when current is not supplied is also quite small and the voltage is also restored quickly to its previous level when the charging current is switched on again after a non-charging interval. Typically, this difference will be 0.02 V with a 50 mA-hr Nicad cell.

Fig. 3 represents the terminal voltage measurement when the cell is substantially fully charged. It can be seen that not only is the voltage drop in a charging or non-charging interval far greater, i.e., 0.6 V compared with 0.02 V, but the voltage falls in an exponential fashion over the non-charging period and then rises exponentially over the next charging period after the charging current has been re-established. When the cell becomes fully charged, oxygen starts to be produced at the positive electrode which is normally absorbed by the negative electrode. This may contribute to the behaviour shown in Fig. 3.

Any suitably known means can be used to measure cell or battery voltage (across its terminals) either after the charging current is switched off, or after the charging current has been re-established, or both. A simple technique would be to detect that a predetermined voltage change has exceeded a given value. Fig. 3 shows the significant and characteristic voltage change which is experienced when a Nicad cell is almost fully charged. At this stage, it would be best to detect the largest voltage change during either the charging, or the non-charging interval, i.e. by sampling the cell voltage at the start and at the finish of the interval, so that the maximum voltage can be detected.

Preferably, a sample and hold circuit is used to sample the terminal voltage at least twice during the charging or non-charging interval. The initial sample value is stored and the subsequent sampled value is then compared with the presently stored value. Means are provided to detect when the comparison exceeds a predetermined amount.

When the voltage change exceeds a predetermined amount, indicating that the Nicad cell or battery is fully charged, a control signal is generated in order to terminate, or to reduce the charging current. A reduction in charging current may be made to safe value, e.g., whereby the Nicad cell or battery is maintained in a fully charged state.

The level of the fast charging current and the interval over which it is intermittently supplied will depend on the size and nature of the Nicad cell or battery (as mentioned previously). However, the general aim is to reduce the charging period from typically 14 hours to about 1 hour. This will indicate that the average fast charging current should be proportioned to achieve an approximately 1 hour charge, but only supplied intermittently, e.g. over alternate 1 second intervals, so as to avoid damaging the cell or battery.

In some cases, it may be desirable to reduce the charging current with time so that a fully charged condition is reached gradually. The charging intervals may also be adjusted depending on the cell or battery being charged.

A description of the preferred embodiment is by way of an example only because modifications and changes may be made without departing from the scope of the invention.

## Claims

1. Apparatus for fast charging a nickel-cadmium (Nicad) cell or battery, the apparatus comprising:

(a) means for providing a fast charging current,

(b) means for periodically terminating said charging current for a predetermined interval and for re-establishing said charging current after the interval, said means being responsive to a control signal either to terminate, or to reduce said charging current.

(c) means for measuring the voltage across the Nicad cell or battery terminals in order to determine that the impedance of the Nicad cell or battery has begun to change with time due to becoming fully charged, which change in impedance occurs either after said charging current is switched off, or after said charging current is switched on, and

(d) means for providing the control signal when the measured voltage indicates said change.

2. Apparatus according to Claim 1 wherein the voltage measuring means measures a predetermined voltage change, the voltage change representing the difference between the terminal voltage measured at instants $t_1$ and $t_2$ which both occur either during the supply of fast charging current, or during a period when the charging current is switched off, where $t_2$ occurs after $t_1$, $t_1$ is the start of one or other period or an instant thereafter, and $t_2$ is the finish of the same period or an instant therebefore.

3. Apparatus according to Claim 1 or 2 wherein the voltage measuring means comprises (a) a sample and hold circuit which is operable to sample and hold the terminal voltage at each instant, and (b) comparison means for comparing a sampled voltage with a held value so that when the comparison exceeds a given amount, the means for providing said control signal is initiated in order to terminate, or to reduce the charging current.

4. Apparatus according to Claim 1 wherein the voltage measuring means measures the rate of change in terminal voltage values measured at similar instants during either the period when fast charging current is supplied, or when the charging current is switched off, which instants occur either successively, or regularly over a predetermined number of respective periods.

5. A method of fast charging a nickel-cadmium (Nicad) cell or battery, the method comprising the steps of:

(a) periodically terminating a fast charging current for a predetermined interval and re-establishing said charging current after the interval,

(b) measuring the Nicad cell or battery terminal voltage either immediately after terminating the charging current, or immediately after re-establishing the charging current, in order to determine that the impedance of the Nicad cell or battery has begun to change with time due to becoming fully charged, and

(c) either terminating the charging current, or reducing it when said change has been detected.

6. A method according to Claim 5 wherein the terminal voltage is measured in order to detect a voltage change at the Nicad cell or battery terminals, the voltage change representing the difference between the terminal voltage measured at instants $t_1$ and $t_2$ which both occur either during the supply of charging current, or during a period when the charging current is switched off, where $t_2$ occurs after $t_1$, $t_1$ is the start of one or other period or an instant thereafter, and $t_2$ is the finish of the same period or an instant therebefore.

7. A method according to Claim 5 or 6 wherein the terminal voltage is measured by means of a sample and hold technique.

8. A method according to Claim 5 wherein the terminal voltage is measured at instants which occur at the same time after the start of either each charging, or non-charging period, which terminal voltage measurements are made successively, or over a predetermined number of the respective periods, and wherein the rate of change of said terminal voltage measurements is used to determine that the impedance of said cell or battery has begun to change with time due to becoming fully charged.

FIG. 1

CHARGING CURRENT

C —

AMPS

0 —

≈ 1 sec.

FIG. 2

CELL VOLTAGE BEFORE BEING FULLY CHARGED

≈ 1·4 V

0·02 V

0V —

FIG. 3

CELL VOLTAGE WHEN FULLY CHARGED

≈ 1·5V

0·16V

0V —